# EUROPEAN PATENT APPLICATION

(11) **EP 4 329 004 A1**
(43) Date of publication of application: **28.02.2024**
(21) Application number: 22819869.3
(22) Date of filing: 16.03.2022
(51) Int. Cl.: H01M 4/14, H01M 4/62, B60R 16/04, H01M 10/06, H01M 10/44

(54) **CONTROL VALVE TYPE LEAD ACID STORAGE BATTERY AND POWER STORAGE SYSTEM PROVIDED WITH SAME**

(30) Priority: 08.06.2021 JP 2021095958
(71) Applicant: GS Yuasa International Ltd., Kisshoin, Minami-ku, Kyoto-shi, Kyoto 601-8520 (JP)
(72) Inventor: HAYASHI, Kazuhiro, Kyoto-shi, Kyoto 601-8520 (JP); AKUTAGAWA, Seiji, Kyoto-shi, Kyoto 601-8520 (JP); SEKIYA, Kazuki, Kyoto-shi, Kyoto 601-8520 (JP); MORIMITSU, Masashi, Kyoto-shi, Kyoto 601-8520 (JP); YAMADA, Nobuharu, Kyoto-shi, Kyoto 601-8520 (JP)
(74) Representative: Isarpatent
(86) International application number: PCT/JP2022/011759
(87) International publication number: WO 2022/259679

(57) **Abstract**

Disclosed is a valve regulated lead-acid battery comprising: a plurality of cells; and a plurality of cell chambers that respectively accommodate the plurality of cells, wherein each of the plurality of cells includes a positive electrode plate, a negative electrode plate, and an electrolyte solution, each of the plurality of cell chambers includes an exhaust valve independent from each other, the positive electrode plate includes a positive electrode material, the negative electrode plate includes a negative electrode material, the negative electrode material contains a carbonaceous material, a specific surface area: Sc of the carbonaceous material determined by a BET method satisfies Sc ≥ 500 m²/g, and a content: Cc of the carbonaceous material in the negative electrode material satisfies Cc ≥ 0.5% by mass.

## Description

### TECHNICAL FIELD

The present invention relates to a valve regulated lead-acid battery and a power storage system including the valve regulated lead-acid battery.

### BACKGROUND ART

Valve regulated (sealed) lead-acid batteries are used in various applications in addition to in-vehicle applications (four-wheeled vehicle, compact mobility (for example, motorcycles), etc.) and industrial applications. The valve regulated lead-acid battery includes a negative electrode plate, a positive electrode plate, a separator interposed between the negative electrode plate and the positive electrode plate, and an electrolyte solution. As the separator, a nonwoven fabric of glass fiber or the like is used. Each of the positive electrode plate and the negative electrode plate contains an electrode material. The negative electrode material includes a carbon material, an organic expander, and the like in addition to lead as an active material.

Patent Document 1 proposes a composition for use in a negative active material in a sealed lead-acid battery, including a carbon material having a BET surface area from 150 m²/g to 2000 m²/g and having a D₉₀-value greater than 5 pm, in which the amount of carbon material ranges from 0.1 wt % to 1.5 wt % based on the total weight of the composition.

Patent Document 2 teaches a method of manufacturing a sealed type lead-acid battery, the method including providing a sealed type lead-acid battery before forming treatment, which includes a recessed groove for fitting and locking in a portion of an enclosure wall for enclosing a recessed portion space, the sealed type lead-acid battery before forming treatment being obtained by arranging, in the recessed portion space prepared in an upper surface of a battery lid, a plurality of exhaust cylinders penetrating through a bottom wall of the recessed portion space to communicate with each cell chamber in a container and applying a safety valve to each exhaust valve; when the lead-acid battery is subjected to formation treatment, applying a temporary lid plate so as to cover an upper side of the exhaust cylinder to which the safety valve is applied, fitting and locking a peripheral edge thereof to the recessed groove for fitting and locking to temporarily fix the peripheral edge to the battery lid, then applying formation treatment to this, then removing the temporary lid plate, then applying the lid plate to an open upper surface of the recessed portion space, and securing the lid plate to the battery lid.

On the other hand, Patent Document 3 teaches a sealed lead-acid battery in which exhaust gas generated from a plurality of cells is guided to a collective centralized exhaust chamber of a lid, and the gas is discharged to the outside from one place of the exhaust chamber, in which the collective centralized exhaust chamber is composed of a recessed portion disposed on an upper surface of the lid, and an upper plate covering an upper surface of the recessed portion, the recessed portion has a vent hole communicating with each cell and disposed on a bottom wall of an upper portion of each cell, and has a partition wall between the neighboring vent holes, and the partition wall has a cut-out disposed on a position where the vent holes communicate with each other at a longest distance.

### PRIOR ART DOCUMENT

### PATENT DOCUMENTS

Patent Document 1: JP-W-2015-537345
Patent Document 2: JP-A-9-270268
Patent Document 3: JP-A-2001-84981

### SUMMARY OF THE INVENTION

### PROBLEMS TO BE SOLVED BY THE INVENTION

The lead-acid battery is sometimes used in a poor charged state called partial state of charge (PSOC). For example, a lead-acid battery mounted on a vehicle subjected to idling stop (Idle Reduction or Start-Stop) control is used in the PSOC. When the lead-acid battery is used in the PSOC, stratification easily proceeds gradually in which a specific gravity of the electrolyte solution in an upper portion of the battery decreases and the specific gravity of the electrolyte solution in a lower portion of the battery increases. As the stratification proceeds, lead sulfate remarkably accumulates in a lower portion of the negative electrode plate, and sulfation in which crystals of lead sulfate are generated is likely to occur. As a result, the capacity is reduced, and the plate is deteriorated due to an uneven charge-discharge reaction, so that the life of the lead-acid battery is shortened. In the present specification, the idling stop may be simply referred to as IS.

### MEANS FOR SOLVING THE PROBLEMS

One aspect of the present invention relates to a valve regulated lead-acid battery comprising:
a plurality of cells; and
a plurality of cell chambers that respectively accommodate the plurality of cells, wherein
each of the plurality of cells includes a positive electrode plate, a negative electrode plate, and an electrolyte solution,
each of the plurality of cell chambers includes an exhaust valve independent from each other,
the positive electrode plate includes a positive electrode material, the negative electrode plate includes a negative electrode material,
the negative electrode material contains a carbonaceous material,
a specific surface area: Sc of the carbonaceous material determined by a BET method satisfies Sc ≥ 500 m²/g, and
a content: Cc of the carbonaceous material in the negative electrode material satisfies Cc ≥ 0.5% by mass.

Another aspect of the present invention relates to a power storage system comprising:
a valve regulated lead-acid battery;
a vehicle that receives power supply from the valve regulated lead-acid battery; and
a state-of-charge controller that controls an SOC of the valve regulated lead-acid battery, wherein
the valve regulated lead-acid battery includes a plurality of cells and a plurality of cell chambers that respectively accommodate the plurality of cells,
each of the plurality of cells includes a positive electrode plate, a negative electrode plate, and an electrolyte solution,
each of the plurality of cell chambers includes an exhaust valve independent from each other,
the negative electrode plate includes a negative electrode material containing a carbonaceous material,
a specific surface area: Sc of the carbonaceous material determined by a BET method satisfies Sc ≥ 500 m²/g,
a content: Cc of the carbonaceous material in the negative electrode material satisfies Cc ≥ 0.5% by mass, and
the vehicle is subjected to idling stop control when the SOC of the valve regulated lead-acid battery is equal to or more than a threshold of 90% or more, and is not subjected to the idling stop control when the SOC of the valve regulated lead-acid battery is less than the threshold.

### BRIEF DESCRIPTION OF THE DRAWINGS

Fig. 1 is a cross-sectional view schematically illustrating a structure of each cell exhaust lead-acid battery according to an embodiment.
Fig. 2 is a cross-sectional view schematically illustrating a structure of a collective exhaust lead-acid battery according to an embodiment.
Fig. 3 is a block diagram schematically illustrating a configuration of a power storage system according to an embodiment.

### MODE FOR CARRYING OUT THE INVENTION

While novel features of the present invention are set forth in the appended claims, the present invention will be better understood in terms of both construction and content by the following detailed description of the drawings, taken in conjunction with other objects and features of the present invention.

When a lead-acid battery is used in a PSOC, stratification proceeds, sulfation easily occurs in a negative electrode plate, and as a result, the life of the lead-acid battery is shortened. On the other hand, when a carbonaceous material is contained in a negative electrode material and the following conditions (A) and (B) are satisfied, the progress of sulfation is suppressed.

Condition (A) A specific surface area Sc of the carbonaceous material determined by a BET method satisfies Sc ≥ 500 m²/g.

Condition (B) A content Cc of the carbonaceous material in the negative electrode material satisfies Cc ≥ 0.5% by mass

This is because in the negative electrode material satisfying the conditions (A) and (B), a conductive path that the carbonaceous material is responsible for remarkably develops, ion conductivity around lead is improved, and lead sulfate is easily reduced in the negative electrode plate. As a result, a charge-discharge reaction in the plate is more uniformly performed, and deterioration of the plate is suppressed. Thus, life performance of the lead-acid battery can be improved.

When Cc < 0.5% by mass, the carbonaceous material cannot provide a sufficient conductive path. Thus, an accumulation amount of lead sulfate is hardly different between the case of Sc < 500 m²/g and the case of Sc ≥ 500 m²/g, and the effect of suppressing accumulation of lead sulfate is hardly observed.

When Sc < 500 m²/g, the effect of suppressing accumulation of lead sulfate is not obtained even when Cc ≥ 0.5% by mass. The valve regulated lead-acid battery contains less electrolyte solution present around lead than the liquid type lead-acid battery. Meanwhile, the charge-discharge reaction is greatly affected by the ion conductivity around lead. When the carbonaceous material having a BET specific surface area Sc of 500 m²/g or more is used at a content Cc of 0.5% by mass or more, a large amount of electrolyte solution can be retained around lead. As a result, the ion conductivity around lead is enhanced, the charge-discharge reaction proceeds more smoothly, and accumulation of lead sulfate is suppressed.

However, the carbonaceous material contained in the negative electrode material can serve as a starting point for promoting a gas generation reaction during charge of the lead-acid battery. Moreover, the gas generation reaction tends to be promoted as the temperature is higher. Even when the lead-acid battery is used in a high temperature environment (for example, in the summer season in Southeast Asian countries), it is desired to achieve a long life as possible.

In a valve regulated lead-acid battery (VRLA) including a plurality of cells and a plurality of cell chambers accommodating the plurality of cells, there are each cell exhaust type and a collective exhaust type in which types of vent valves are different. Each cell exhaust type is a type in which the plurality of cell chambers include exhaust valves independent from each other. On the other hand, the collective exhaust type is a type that includes one or more (but less than the number of cell chambers) exhaust valves communicating with the plurality of cell chambers and collectively exhausts gases generated in the plurality of cell chambers.

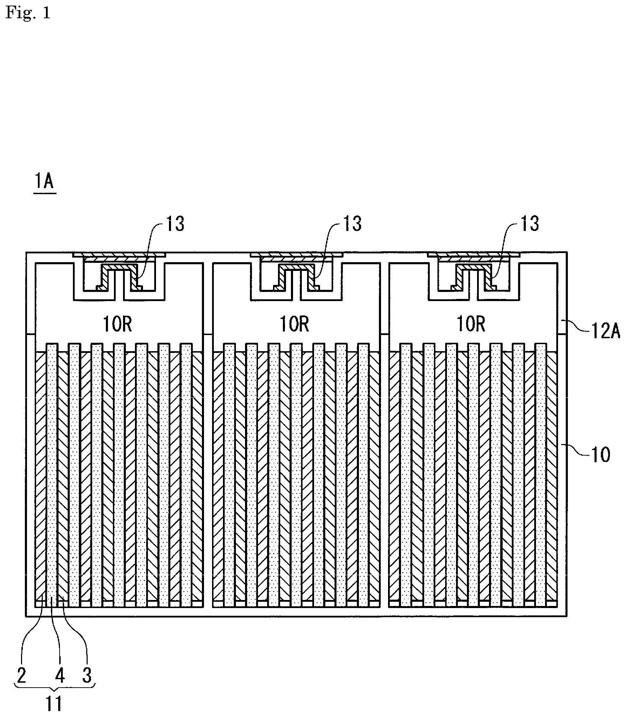

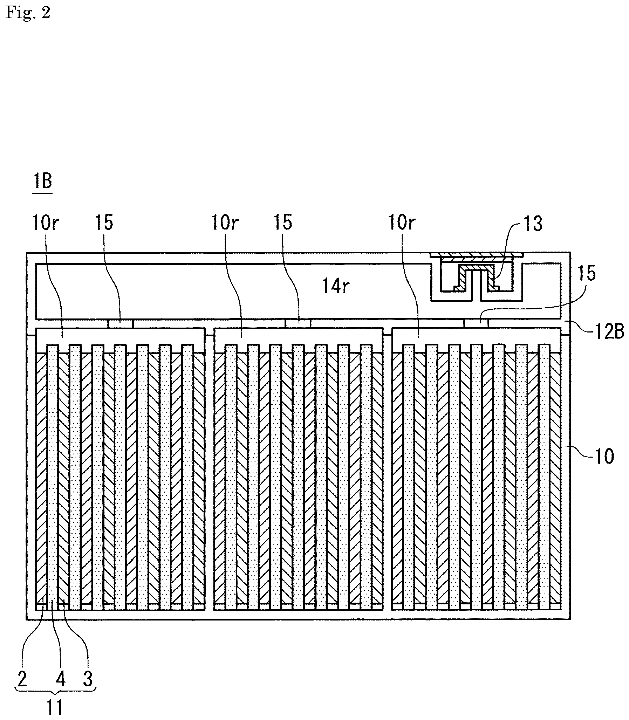

Fig. 1 is a cross-sectional view schematically illustrating a structure of each cell exhaust lead-acid battery. Fig. 2 is a cross-sectional view schematically illustrating a structure of the collective exhaust lead-acid battery.

In Fig. 1, each cell exhaust lead-acid battery 1A includes a container 10 that accommodates an element 11 and an electrolyte solution (not illustrated). An upper opening of the container 10 is sealed by a lid 12A. The element 11 is configured by stacking a plurality of negative electrode plates 2 and a plurality of positive electrode plates 3 with a separator 4 interposed therebetween.

An upper portion of each of the plurality of negative electrode plates 2 is provided with a current collection lug (not illustrated) projecting upward. An upper portion of each of the plurality of positive electrode plates 3 is also provided with a current collection lug (not illustrated) projecting upward. The lugs of the negative electrode plates 2 are connected and integrated with each other by a negative electrode strap (not illustrated). Similarly, the lugs of the positive electrode plates 3 are also connected and integrated with each other by a positive electrode strap (not illustrated). The negative electrode strap is connected to a negative pole (not illustrated) serving as an external terminal, and the positive electrode strap is connected to a positive pole (not illustrated) serving as an external terminal.

The container 10 is divided into a plurality of (three in the illustrated example) cell chambers 10R independent from each other, and one element 11 is housed in each of the cell chambers 10R. The lid 12A includes an independent exhaust valve 13 for each of the cell chambers 10R. When an internal pressure of the cell chamber 10R exceeds a predetermined upper limit value, the exhaust valve 13 is opened to directly release gas from the cell chamber 10R to the outside. When the internal pressure of the cell chamber 10R is equal to or lower than the upper limit value, oxygen generated in the positive electrode plate 3 is reduced in the negative electrode plate 2 in the same cell chamber 10R to generate water.

Also in a collective exhaust lead-acid battery 1B illustrated in Fig. 2, the container 10 is divided into a plurality of (three in the illustrated example) cell chambers 10r independent from each other, and one element 11 is housed in each of the cell chambers 10r. However, a lid 12B has a collective exhaust chamber 14r communicating with each cell chamber via a vent hole 15, and the collective exhaust chamber 14r includes a smaller number (one in the illustrated example) of exhaust valves 13 than the number of cell chambers. When an internal pressure of the collective exhaust chamber 14r exceeds a predetermined upper limit value, the exhaust valve 13 is opened to release gas from the collective exhaust chamber 14r to the outside. When the internal pressure of the collective exhaust chamber 14r is equal to or less than the upper limit value, oxygen generated in the positive electrode plate 3 is reduced in the negative electrode plate 2 in arbitrary cell chamber 10r to generate water.

Here, it has been found that, in a collective exhaust valve regulated lead-acid battery satisfying the conditions (A) and (B), under a predetermined charge-discharge cycle condition including a high temperature region, power may decrease, voltage transition may become unstable, and the expected life may not be reached. Such a phenomenon is a unique phenomenon observed in the collective exhaust type. As a result of searching for the cause, an increase in internal resistance in some cells is confirmed, and it has been found that there is the following deterioration mechanism.

Since the plurality of cell chambers have different environments, a liquid reduction amount of the electrolyte solution is not the same, and a liquid retention amount varies. In the case of the collective exhaust type, gas can move between the cell chambers via a passage (collective exhaust chamber 14r) that communicates the plurality of cell chambers with the exhaust valve. Thus, oxygen gas generated in the cell having a large liquid retention amount easily flows into the cell having a relatively small liquid retention amount, and the cell having a small liquid retention amount absorbs a larger amount of oxygen gas. Oxygen absorbed by the negative electrode plate generates PbO and then is converted into PbSO₄. That is, a difference occurs in an oxygen absorption amount between the cells, and as a result, a difference occurs in a production amount of lead sulfate. Such a variation in a degree of sulfation increases variation in charge efficiency and liquid reduction amount, and promotes deterioration of some cells.

Thus, a valve regulated lead-acid battery (hereinafter, also referred to as the lead-acid battery A) according to an embodiment of the present invention includes a plurality of cells and a plurality of cell chambers that respectively accommodate the plurality of cells, each of the plurality of cells includes a positive electrode plate, a negative electrode plate, and an electrolyte solution, each of the plurality of cell chambers includes an exhaust valve independent from each other, the positive electrode plate includes a positive electrode material, the negative electrode plate includes a negative electrode material, the negative electrode material contains a carbonaceous material, and a condition (A) (specific surface area Sc of the carbonaceous material determined by a BET method ≥ 500 m²/g), and a condition (B) (a content Cc of the carbonaceous material in the negative electrode material ≥ 0.5% by mass) are satisfied.

In the case of each cell exhaust type, exhaust valves independent from each other are provided, and each exhaust valve communicates only with the corresponding cell chamber. Therefore, gas does not move between the cell chambers, and the oxygen gas generated in the cell having a large liquid retention amount does not flow into the cell having a relatively small liquid retention amount and is not absorbed. Thus, variation in the degree of sulfation is less likely to occur between the cells, and deterioration of some cells is not promoted due to variation in charge efficiency and liquid reduction amount unlike the collective exhaust type. As a result, the effect of satisfying the conditions (A) and (B), that is, the remarkable development of the conductive path by the carbonaceous material in the negative electrode material becomes apparent, and the effect of suppressing sulfation of the negative electrode plate is enhanced. In each cell exhaust type, a significant difference occurs in the life of the valve regulated lead-acid battery between a case where the conditions (A) and (B) are satisfied and a case where the conditions (A) and (B) are not satisfied. Such a difference is not observed in the collective exhaust type, and is a phenomenon specific to each cell exhaust type.

The lead-acid battery A preferably further satisfies the following condition (C):
condition (C): 650 m²/g ≤ Sc ≤ 1000 m²/g

When the condition (C) is satisfied, the effect of enhancing the ion conductivity around lead is sufficiently exhibited, and an influence of an excessively high specific surface area is also suppressed. For example, it is considered that an adsorption reaction of an active ingredient (for example, an organic expander such as lignin) in the battery is suppressed.

The lead-acid battery A can be used in various applications in addition to in-vehicle applications (four-wheeled vehicle, compact mobility, etc.) and industrial applications. Among them, compact mobility (for example, motorcycle) has a higher risk of overturning than four-wheeled vehicles and the like, and therefore, the use of liquid type (valve type) lead-acid batteries is limited, and valve regulated lead-acid batteries tend to be often employed. Thus, the lead-acid battery A is particularly suitable for mounting in compact mobility.

Since the lead-acid battery A satisfies the conditions (A) and (B), sulfation less likely to proceed, and therefore, the lead-acid battery A is suitable for applications used in a PSOC state. Examples of the application to be used in the PSOC state include power source applications such as a vehicle (hereinafter, referred to as the ISS vehicle) subjected to idling stop (IS) control, a micro hybrid vehicle, and a mild hybrid vehicle. In recent years, development of compact mobility having an idling stop (IS) control function has also progressed.

A four-wheeled vehicle having the IS control function usually includes a battery management system (BMS) for performing advanced charge-discharge control of a lead-acid battery. The BMS incorporates a state-of-charge controller that controls the state of charge (SOC) of the lead-acid battery. The state-of-charge controller controls the SOC of the lead-acid battery to, for example, 70% or more and less than 90% during the IS control of the four-wheeled vehicle. This makes it possible to charge the lead-acid battery with regenerative energy without waste as much as possible at the time of deceleration of the vehicle.

The SOC indicates a ratio of a charged electricity amount to an amount of charge (100%) when the lead-acid battery is fully charged. In the present specification, the fully charged state of 100% of the valve regulated lead-acid battery is a state in which charge is finished according to the condition of full charge described in 8.2.2 (revised on March 20, 2004) of JIS D 5302: 2004.

On the other hand, in the compact mobility such as a motorcycle, charge control of regenerative energy is not usually performed in many cases. Thus, the lead-acid battery for compact mobility is controlled to a sufficiently high SOC (for example, 90% or more) even during an IS control period by the state-of-charge controller. As the charge-discharge is repeated in a state where the SOC is high, a gas generation amount tends to increase. Thus, the life of the collective exhaust lead-acid battery for compact mobility is more likely to be reduced. On the other hand, each cell exhaust lead-acid battery A can improve the life even when mounted in a compact mobility in which the lead-acid battery A is charged and discharged at a high SOC and the gas generation amount tends to increase.

Here, the lead-acid battery for compact mobility refers to a lead-acid battery included in the application range of IEC 60095-7: 2019 and the application range of JIS D 5302: 2004. Compact mobility refers to motorcycles and power sports vehicles. The motorcycle includes, for example, motorcycles and motor tricycles, and the power sports vehicle includes, for example, buggies (including both three-wheeled buggies and four-wheeled buggies), water skis, snowmobiles, and all-terrain vehicles. In the compact mobility, the lead-acid battery A for compact mobility is mounted together with an engine.

When the SOC is high, the negative electrode material contains a large amount of lead having high conductivity. When the conductivity of the negative electrode material is high, it is considered that the charge-discharge reaction is greatly affected by the ion conductivity of the electrolyte solution around lead. The valve regulated lead-acid battery contains less electrolyte solution present around lead than the liquid type lead-acid battery. When the carbonaceous material having a BET specific surface area Sc of 500 m²/g or more is used at a content Cc of 0.5% by mass or more, a large amount of electrolyte solution can be retained around lead. As a result, the ion conductivity around lead is enhanced, the charge-discharge reaction proceeds more smoothly. That is, by using the carbonaceous material as described above, a reaction at an interface between lead and the electrolyte solution is promoted. As a result, it is considered that accumulation of lead sulfate in the negative electrode plate is suppressed.

The vehicle of the power storage system may be a vehicle that is subjected to idling stop control when the SOC of the lead-acid battery A is equal to or more than a threshold of 90% or more and is not subjected to idling stop control when the SOC of the lead-acid battery A is less than the threshold. In a vehicle in which the idling stop control is performed when the SOC of the lead-acid battery A is equal to or more than a threshold of 90% or more and the idling stop control is not performed when the SOC of the lead-acid battery A is less than the threshold, the state-of-charge controller charges the lead-acid battery A at a constant voltage until the SOC of the lead-acid battery A reaches a predetermined SOC when the SOC of the lead-acid battery A is less than the threshold.

Here, the "threshold" is a preset reference SOC, and the expression "reaching the threshold" means that the SOC becomes the threshold or an SOC in the vicinity of the threshold. The SOC in the vicinity of the threshold refers to a predetermined SOC equal to or less than the threshold and a predetermined SOC more than the threshold. Thus, the state-of-charge controller may start charging the lead-acid battery A when the SOC reaches a predetermined SOC equal to or less than the threshold, or may start charging the lead-acid battery A when the SOC reaches a predetermined SOC more than the threshold. A power storage system including such a vehicle and the lead-acid battery A also corresponds to an embodiment of the present invention.

The lead-acid battery A is charged at a constant voltage while the engine is driven. At this time, an alternator is operated to generate power, and the lead-acid battery A is charged at a constant voltage. At the time of constant voltage charge, a charge voltage is set in order to avoid overcharge of the lead-acid battery A. For example, when the SOC of the lead-acid battery A reaches the threshold from a value more than the threshold, the engine of the vehicle is not stopped, and constant voltage charge from the alternator is continued. Thus, the SOC of the lead-acid battery A is controlled so as to maintain the SOC equal to or more than the threshold.

Here, when the lead-acid battery A is charged until the SOC becomes equal to or more than the threshold (for example, the SOC is 95% or more or 99% or more), the state-of-charge controller preferably charges the lead-acid battery A at a constant voltage of 2.39 V/cell or more and 2.45 V/cell or less. For example, in the case of the lead-acid battery A including six cells connected in series, it is preferable to charge the lead-acid battery A at a constant voltage of 14.34 V or more and 14.7 V or less. By charging at a voltage exceeding 14.0 V in this manner, the progress of stratification and sulfation of the lead-acid battery is further effectively suppressed.

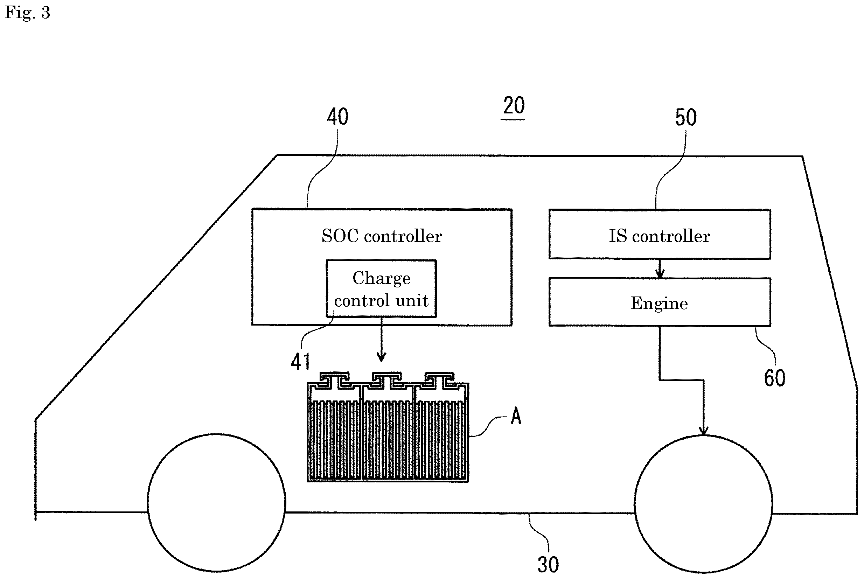

Fig. 3 is a block diagram schematically illustrating the power storage system having the above configuration. The power storage system 20 includes the lead-acid battery A, a vehicle 30 that receives power supply from the lead-acid battery A, and a state-of-charge controller 40 that controls the SOC of the lead-acid battery A. The state-of-charge controller 40 includes a charge control unit 41 that controls charge of the lead-acid battery A. The vehicle 30 is an idling stop vehicle (IS vehicle) including an idling reduction system by an idling stop (IS) controller 50. The idling stop system may be referred to as an ISS. The ISS refers to a system in which the engine 60 is controlled to stop when the vehicle is parked or stopped. In the ISS, the current required for the vehicle is supplied by the battery mounted on the vehicle while the engine is stopped. In the ISS, while the engine is stopped, the engine is restarted when the SOC of the battery reaches a predetermined threshold. A period from stop of the engine by parking or stopping the vehicle to restart of the engine is referred to as an idling stop period (IS period). The idling stop control (IS control) refers to control in which, when the SOC of the lead-acid battery A is controlled to maintain a threshold of 90% or more, the state-of-charge controller 40 charges the lead-acid battery A at a constant voltage of 2.39 V/cell or more and 2.45 V/cell or less when the SOC of the lead-acid battery A reaches the threshold during the IS period.

The negative electrode material may further contain an organic expander. This can improve low-temperature high rate (HR) discharge performance. However, when the organic expander is adsorbed to the carbonaceous material, the shrink-proofing effect of the organic expander is less likely to be exhibited. When the carbonaceous material having a large specific surface area Sc is used, an influence of adsorption of the organic expander by the carbonaceous material is likely to appear. From the viewpoint of securing higher low-temperature HR discharge performance, the content Ce (% by mass) of the organic expander in the negative electrode material preferably satisfies Ce > 0.368 Cc + 0.054. It is considered that the organic expander increases a hydrogen generation overvoltage by coating a lead surface, and thus has an effect of suppressing a decrease of the electrolyte solution.

The content Ce of the organic expander more preferably satisfies 0.372 Cc + 0.092 ≤ Ce ≤ 0.373 Cc + 0.249. By satisfying 0.372 Cc + 0.092 ≤ Ce, the effect of suppressing the low-temperature HR discharge performance and the decrease in the electrolyte solution can be further enhanced. By satisfying Ce ≤ 0.373 Cc + 0.249, excessive coating of the carbonaceous material and lead with the organic expander is suppressed. High conductivity of the negative electrode material is maintained, so that deterioration of charge acceptability can be suppressed.

The lead-acid battery A is required to have excellent balance among the accumulation suppression of lead sulfate, the low-temperature HR discharge performance, the charge acceptability, and a liquid reduction suppression effect in a wide temperature range. By using a carbonaceous material having a specific surface area Sc of 500 m²/g ≤ Sc and adjusting the content Ce of the organic expander according to the content Cc of the carbonaceous material by the above formula, the balance of the characteristics as described above can be adjusted with high accuracy. Thus, even when the lead-acid battery A is used in various regions in the world, excellent performance can be exhibited, and stable quality can be obtained.

### (Positive electrode material)

In the positive electrode plate, the positive electrode material is held by the positive current collector. The positive electrode material is obtained by removing the positive current collector from the positive electrode plate. A member such as a mat or a pasting paper may be stuck to the positive electrode plate. Such a member is assumed to be included in the positive electrode plate because the member (also referred to as a sticking member) is used integrally with the positive electrode plate. When the positive electrode plate includes the sticking member, the positive electrode material is obtained by removing the positive current collector and the sticking member from the positive electrode plate.

Hereinafter, the lead-acid battery A of the embodiment of the present invention will be described more specifically. However, the present invention is not limited to the following embodiment.

### (Negative electrode plate)

### (Negative electrode material)

The negative electrode plate usually includes a negative current collector and a negative electrode material, and the negative electrode material is held by the negative current collector. The negative electrode material is obtained by removing the negative current collector from the negative electrode plate. A member such as a mat or a pasting paper may be stuck to the negative electrode plate. Such a member (also referred to as a sticking member) is used integrally with the negative electrode plate and is thus assumed to be included in the negative electrode plate. Also, when the negative electrode plate includes the sticking member, the negative electrode material excludes the negative current collector and the sticking member.

The negative electrode material contains, as an essential component, a negative active material (lead or lead sulfate) that exhibits a capacity through an oxidation-reduction reaction. The negative active material in the state of charge is spongy lead, but the non-formed negative electrode plate is usually prepared using lead powder. The negative electrode material further contains a carbonaceous material as an additive. The negative electrode material may further contain an additive (organic expander, barium sulfate, etc.) other than the carbonaceous material.

### (Negative current collector)

The negative current collector may be prepared by casting lead (Pb) or a lead alloy, or may be prepared by processing a lead sheet or a lead alloy sheet. Examples of the processing method include expanding processing or punching processing. It is preferable to use the grid-like current collector as the negative current collector because the negative electrode material is easy to support.

The lead alloy used for the negative current collector may be any of a Pb-Ca-based alloy and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be provided in a part of the negative current collector. The surface layer may be provided in the lug of the negative current collector. The surface layer of the lug may contain Sn or an Sn alloy.

### (Carbonaceous material)

Examples of the carbonaceous material contained in the negative electrode material include carbon black, graphite, hard carbon, soft carbon, and the like. Examples of the carbon black include acetylene black, furnace black, and lamp black. Furnace black also includes ketjen black (product name). The graphite may be a carbonaceous material including a graphitetype crystal structure and may be either artificial graphite or natural graphite. One kind of carbonaceous material may be used singly, or two or more kinds thereof may be used in combination.

Among the carbonaceous materials, the carbonaceous material in which an intensity ratio I_{D}/I_{G} of a peak (D band) appearing in a range of 1,300 cm⁻¹ or more and 1,350 cm⁻¹ or less in a Raman spectrum to a peak (G band) appearing in a range of 1,550 cm⁻¹ or more and 1,600 cm⁻¹ or less is 0 or more and 0.9 or less is referred to as graphite. The graphite may be either artificial graphite or natural graphite.

The carbonaceous material has a specific surface area (BET specific surface area) Sc measured by the BET (Brunauer-Emmett-Teller) method of 500 m²/g or more. When the BET specific surface area Sc is less than 500 m²/g, it is difficult to sufficiently suppress the accumulation of lead sulfate in the negative electrode plate even when the content of the carbonaceous material is 0.5% by mass or more. From the viewpoint of securing higher suppression of accumulation of lead sulfate, the BET specific surface area Sc is preferably 650 m²/g or more, more preferably 750 m²/g or more, and may be 800 m²/g or more. From the viewpoint of securing higher suppression of accumulation of lead sulfate, the BET specific surface area Sc is preferably 1000 m²/g or less. The BET specific surface area is a specific surface area obtained using a BET equation by a gas adsorption method in which a nitrogen gas is used as an adsorption gas.

From the viewpoint of easily controlling the BET specific surface area Sc of the carbonaceous material within the above range, the carbonaceous material preferably contains at least furnace black (in particular, Ketjen black). The carbonaceous material may contain furnace black (in particular, Ketjen black) and other carbonaceous materials. When two or more kinds of carbonaceous materials are combined, the kind of the carbonaceous materials to be combined may be selected or the ratio may be adjusted so that the BET specific surface area Sc of the entire carbonaceous material falls within the above range.

The content Cc of the carbonaceous material in the negative electrode material is 0.5% by mass or more. When the content Cc of the carbonaceous material is less than 0.5% by mass, the effect of suppressing accumulation of lead sulfate in the negative electrode plate does not depend on the BET specific surface area Sc of the carbonaceous material. From the viewpoint of securing a higher effect of suppressing accumulation of lead sulfate, the content Cc of the carbonaceous material may be 0.75% by mass or more. The content Cc of the carbonaceous material is, for example, 2% by mass or less and may be 1.75% by mass or less.

The content Cc of the carbonaceous material may be 0.5% by mass or more and 2% by mass or less (or 1.75% by mass or less), or 0.75% by mass or more and 2% by mass or less (or 1.75% by mass or less).

### (Organic expander)

The organic expander refers to an organic compound among compounds having a function of suppressing shrinkage of lead as a negative active material when charge-discharge of the lead-acid battery is repeated. As the organic expander, for example, at least one selected from the group consisting of lignin compounds and synthetic organic expanders may be used.

Examples of the lignin compounds include lignin and lignin derivatives. Examples of the lignin derivative include lignin sulfonic acid or salts thereof (such as alkali metal salts (sodium salts and the like)), and the like.

The synthetic organic expander used in a lead-acid battery is usually an organic condensate (hereinafter, simply referred to as a condensate). The condensate is a synthetic substance that can be obtained using a condensation reaction. The condensate may include a unit of an aromatic compound (hereinafter, also referred to as an aromatic compound unit). The unit of an aromatic compound refers to a unit derived from an aromatic compound incorporated in a condensate. That is, the aromatic compound unit is a residue of an aromatic compound. The condensate may contain one kind or two or more kinds of aromatic compound units.

Examples of the condensate include a condensate of an aromatic compound with an aldehyde compound. Such a condensate may be synthesized by reacting an aromatic compound with an aldehyde compound. Here, a condensate containing a sulfur element can be obtained by performing a reaction between an aromatic compound and an aldehyde compound in the presence of a sulfite or using an aromatic compound containing a sulfur element as an aromatic compound (for example, bisphenol S). For example, the sulfur element content in the condensate can be adjusted by adjusting at least one of the amount of the sulfite and the amount of the aromatic compound containing sulfur element. The method may be applied to the case of using other raw materials. The aromatic compound to be condensed for obtaining the condensate may be one kind or two or more kinds. The aldehyde compound may be an aldehyde (for example, formaldehyde), or a condensate (or a polymer) of an aldehyde. Examples of the aldehyde condensate (or polymer) include paraformaldehyde, trioxane, and tetraoxymethylene. The aldehyde compound may be used singly or in combination of two or more kinds thereof. Formaldehyde is preferable from the viewpoint of high reactivity with an aromatic compound.

The aromatic compound may have a sulfur-containing group. That is, the condensate may be an organic polymer containing a plurality of aromatic rings in the molecule and containing a sulfur element as a sulfur-containing group. The sulfur-containing group may be directly bonded to an aromatic ring contained in the aromatic compound, and for example, may be bonded to the aromatic ring as an alkyl chain having a sulfur-containing group. Among the sulfur-containing groups, a sulfonic acid group or a sulfonyl group which is in a stable form is preferable. The sulfonic acid group may exist in an acid form, or may exist in a salt form like a Na salt.

Examples of the aromatic ring of the aromatic compound include a benzene ring and a naphthalene ring. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like).

Examples of the aromatic compound include a compound having the aromatic ring and a functional group (hydroxy group, amino group, and the like). The functional group may be directly bonded to the aromatic ring, or may be bonded as an alkyl chain having a functional group. The hydroxy group also includes salts of hydroxy group (-OMe). The amino group also includes salts of an amino group (salts with anions). Examples of Me include alkali metals (Li, K, Na, and the like) and Group 2 metals of the periodic table (Ca, Mg, and the like). The aromatic compound may have a sulfur-containing group and a substituent other than the functional group (for example, an alkyl group or an alkoxy group) in the aromatic ring.

The aromatic compound as the base of the aromatic compound unit may be at least one selected from the group consisting of a bisarene compound and a monocyclic aromatic compound.

Examples of the bisarene compound include a bisphenol compound, a hydroxybiphenyl compound, and a bisarene compound having an amino group (bisarylalkane compound having an amino group, bisarylsulfone compound having an amino group, biphenyl compound having an amino group, and the like). Among them, the bisphenol compound is preferable.

As the bisphenol compound, bisphenol A, bisphenol S, bisphenol F, and the like are preferable. For example, the bisphenol compound may contain at least one selected from the group consisting of bisphenol A and bisphenol S. By using bisphenol A or bisphenol S, the excellent shrink-proofing effect on the negative electrode material can be obtained.

The bisphenol compound may have a bisphenol skeleton, and the bisphenol skeleton may have a substituent. That is, bisphenol A may have a bisphenol A skeleton, and the skeleton may have a substituent. Bisphenol S may have a bisphenol S skeleton, and the skeleton may have a substituent.

As the monocyclic aromatic compound, a hydroxymonoarene compound, an aminomonoarene compound, and the like are preferable. Among them, a hydroxymonoarene compound is preferable.

Examples of the hydroxymonoarene compound include a hydroxynaphthalene compound and a phenol compound. For example, it is preferable to use a phenolsulfonic acid compound which is a phenol compound (phenol sulfonic acid or a substitution product thereof). As described above, the phenolic hydroxy group also includes a salt of the phenolic hydroxy group (-OMe).

Examples of the aminomonoarene compound include an aminonaphthalene compound and an aniline compound (aminobenzenesulfonic acid, alkylaminobenzenesulfonic acid, etc.).

As described above, the negative electrode material contains a carbonaceous material having a relatively large BET specific surface area Sc. When such a carbonaceous material is used, the organic expander is adsorbed to the carbonaceous material, and it may be difficult to effectively exhibit the effect of the organic expander. From the viewpoint of more effectively exhibiting the effect by using the organic expander, the content Ce of the organic expander contained in the negative electrode material is preferably determined according to the BET specific surface area Sc of the carbonaceous material. From the viewpoint of securing higher constant temperature HR discharge performance, the content Ce of the organic expander in the negative electrode material preferably satisfies Ce > 0.368 Cc + 0.054 (1). From the viewpoint of further enhancing the low-temperature HR discharge performance and the effect of suppressing the decrease in the electrolyte solution, the content Ce of the organic expander is preferably 0.372 Cc + 0.092 ≤ Ce (2). From the viewpoint of enhancing the effect of suppressing the deterioration of the charge acceptability, the content Ce of the organic expander preferably satisfies Ce ≤ 0.373 Cc + 0.249 (3). These relationships are established in a range in which the BET specific surface area Sc of the carbonaceous material is 500 m²/g or more (or 650 m²/g or more, 750 m²/g or more, or 800 m²/g or more) and 1000 m²/g or less.

The relationships (1) to (3) are obtained from the results of evaluating the low-temperature HR discharge performance, the charge acceptability, and the decrease in the electrolyte solution by using a plurality of carbonaceous materials having different BET specific surface areas Sc and changing the content Cc of the carbonaceous material and the content Ce of the organic expander.

### (Barium sulfate)

The negative electrode material may contain barium sulfate. The content of barium sulfate in the negative electrode material is, for example, 0.05% by mass or more and may be 0.10% by mass or more. The content of barium sulfate in the negative electrode material is, for example, 3% by mass or less and may be 2% by mass or less.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

### (Analysis of constituent components of negative electrode material)

Hereinafter, a method of analyzing the negative electrode material or constituent components thereof will be described. Prior to analysis, a lead-acid battery in a fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed from the negative electrode plate by peeling. Next, the negative electrode material is separated from the negative electrode plate to obtain a sample (hereinafter, referred to as sample A), and the mass of the sample A (Mo) is measured. The sample A is ground as necessary and subjected to analysis.

The lead-acid battery in the fully charged state refers to a battery obtained by fully charging a formed lead-acid battery. The full charge of the lead-acid battery may be performed immediately after formation or may be performed after the lapse of time from formation so long as being performed after formation (e.g., a lead-acid battery in use (preferably at the initial stage of use) after formation may be fully charged). The battery at the initial stage of use refers to a battery that has not been used for a long time and has hardly deteriorated.

### (1) Analysis of organic expander

### (1-1) Qualitative analysis of organic expander in negative electrode material

The ground sample A is immersed in a 1 mol/L sodium hydroxide (NaOH) aqueous solution to extract the organic expander. If the extract contains a plurality of organic expanders, then each organic expander is separated from the extract. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as the sample B) of the organic expander.

A type of the organic expander is specified using a combination of information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, or an NMR spectrum of a solution obtained by dissolving the sample B in a predetermined solvent such as heavy water, and the like.

### (1-2) Quantitative determination of content of organic expander in negative electrode material

Similarly to (1-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a standard curve prepared in advance.

When a lead-acid battery in which the content of the organic expander is unknown is obtained and the content of the organic expander is measured, a structural formula of the organic expander cannot be strictly specified, so that the same organic expander may not be used for the standard curve. In this case, the content of the organic expander is measured using the ultraviolet-visible absorption spectrum by creating a standard curve using a separately available organic polymer in which the ultraviolet-visible absorption spectrum, the infrared spectroscopic spectrum, the NMR spectrum, and the like exhibit shapes similar to the organic expander extracted from the negative electrode of the battery.

### (2) Quantitative determination of carbonaceous material and barium sulfate

To 10 g of the ground sample A, 50 ml of nitric acid having a concentration of 20% by mass is added and heated for about 20 minutes to dissolve the lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The obtained sample is a mixed sample of carbonaceous material and barium sulfate (hereinafter also referred to as sample C). Amass (Mₘ) of the sample C is measured by subtracting the mass of the membrane filter from the total mass of dried sample C and the membrane filter. Thereafter, the dried sample C is placed in a crucible together with a membrane filter and is burned and incinerated at 700°C or higher. The residue remaining is barium oxide. The mass of barium sulfate (M_{B}) is determined by converting the mass of barium oxide to the mass of barium sulfate. The mass of the carbonaceous material is calculated by subtracting the mass M_{B} from the mass Mₘ. A ratio (% by mass) of each mass in the sample A is determined, and taken as the content Cc of the carbonaceous material and the content of lead sulfate in the negative electrode material.

### (3) BET specific surface area S_{c} of carbonaceous material

### (3-1) Separation of carbonaceous material

A predetermined amount of ground sample A is taken, and the mass thereof is measured. To the sample A, 30 mL of a nitric acid aqueous solution at a concentration of 60% by mass is added per 5 g of the sample A, and the mixture is heated at 70°C ± 5°C. To the resulting mixture, 10 g of disodium ethylenediaminetetraacetate, 30 mL of ammonia water having a concentration of 28% by mass, and 100 mL of water are added per 5 g of sample A, and heating is continued to dissolve a soluble component. The sample A is pretreated in this manner. The dispersion liquid obtained by the pretreatment is filtered with a membrane filter (opening: 0.1 pm) to collect a solid. The collected sample is passed through a sieve with an opening of 500 pm to remove components having a large size (reinforcing material), and components having passed through the sieve are collected as the carbonaceous materials.

### (3-2) Measurement of BET specific surface area Sc

The BET specific surface area Sc of the carbonaceous material collected in (3-1) above is determined by the gas adsorption method using a BET equation. More specifically, the carbonaceous material is pretreated by heating at a temperature of 150°C ± 5°C for 1 hour in a nitrogen flow. Using the pretreated carbonaceous material, the BET specific surface area is determined by the following apparatus under the following conditions, and is defined as the BET specific surface area Sc of the carbonaceous material.
Measuring apparatus: TriStar 3000 manufactured by Micromeritics Instrument Corporation.
Adsorption gas: nitrogen gas having a purity of 99.99% or more
Adsorption temperature: liquid nitrogen boiling point temperature (77 K)
Method for calculating BET specific surface area: in accordance with 7.2 of JIS Z 8830:2013

### (Others)

The negative electrode plate can be prepared in such a manner that a negative current collector is coated or filled with a negative electrode paste, which is then cured and dried to prepare a non-formed negative electrode plate, and thereafter, the non-formed negative electrode plate is formed. The negative electrode paste is prepared by adding water and sulfuric acid to lead powder and an organic expander, and various additives as necessary, and kneading the mixture. At the time of curing, it is preferable to cure the non-formed negative electrode plate at a higher temperature than room temperature and high humidity.

The formation can be performed by charging the element with electricity in a state where the element including the non-formed negative electrode plate is immersed in the electrolyte solution containing sulfuric acid in the container of the lead-acid battery. However, the formation may be performed before the lead-acid battery or the element is assembled. The formation produces spongy lead.

### (Positive electrode plate)

The positive electrode plate usually includes a positive current collector and a positive electrode material. The positive electrode material is held by the positive current collector. The positive electrode plate of a lead-acid battery can be classified into a paste-type, a clad-type, and the like. A paste-type positive electrode plate is suitably used.

The positive current collector may be prepared by casting lead (Pb) or a lead alloy, or may be prepared by processing a lead sheet or a lead alloy sheet. Examples of the processing method include expanding processing or punching processing. It is preferable to use a grid-shaped current collector as the positive current collector because the positive electrode material is easy to be supported.

As a lead alloy used for the positive current collector, a Pb-Ca-based alloy and a Pb-Ca-Sn-based alloy are preferable in terms of corrosion resistance and mechanical strength. The positive current collector may include a surface layer. The surface layer and the inner layer of the positive current collector may have different compositions. The surface layer may be provided in a part of the positive current collector. The surface layer may be provided only on the grid part, only on the lug part, or only on the frame rib part of the positive current collector.

In the paste-type positive electrode plate, the positive electrode material is obtained by removing the positive current collector from the positive electrode plate. A member such as a mat or a pasting paper may be stuck to the positive electrode plate. Such a member (sticking member) is used integrally with the positive electrode plate and is thus assumed to be included in the positive electrode plate. When the positive electrode plate includes a sticking member (a mat, a pasting paper, etc.), the positive electrode material is a material excluding the positive current collector and the sticking member from the positive electrode plate in the paste-type positive electrode plate.

The positive electrode material contained in the positive electrode plate contains a positive active material (lead dioxide or lead sulfate) that exhibits a capacity through an oxidation-reduction reaction. The positive electrode material may contain another additive if necessary.

A non-formed paste-type positive electrode plate is obtained by filling a positive current collector with a positive electrode paste, and curing and drying the paste. The positive electrode paste is prepared by mixing lead powder, an additive, water, and sulfuric acid.

The positive electrode plate is obtained by forming the non-formed positive electrode plate. The formation can be performed by charging the element in the state where the element including the non-formed positive electrode plate immersed in the electrolyte solution containing sulfuric acid in the container of the lead-acid battery. However, the formation may be performed before the lead-acid battery or the element is assembled.

### (Separator)

The lead-acid battery A usually includes a separator interposed between a positive electrode plate and a negative electrode plate. The separator is composed of a nonwoven fabric. The nonwoven fabric is a mat in which glass fibers are intertwined without being woven. The thickness of separators interposed between the negative electrode plate and the positive electrode plate may be selected in accordance with the inter-electrode distance. The number of separators may be selected according to the number of the electrode gaps.

The nonwoven fabric is mainly composed of fibers. As the fibers, there can be used glass fibers, polymer fibers (polyolefin fiber, acrylic fiber, polyester fiber (polyethylene terephthalate fiber, or the like), and the like), pulp fibers, and the like. Among them, glass fibers are preferable. The nonwoven fabric may contain components in addition to the fibers, such as acid-resistant inorganic powder, and a polymer as a binder.

An average fiber diameter of the glass fiber is preferably, for example, 0.1 pm or more and 25 pm or less. The average fiber diameter can be determined from enlarged photographs of arbitrarily selected ten or more fibers. The glass fiber may be used by mixing fibers having a single fiber diameter and fibers having a plurality of fiber diameters (for example, 1 pm glass fibers and 10 pm glass fibers).

The nonwoven fabric may contain a fiber material insoluble in the electrolyte solution in addition to the glass fiber. As the fiber material other than the glass fiber, there can be used glass fibers, polymer fibers (e.g., polyolefin fiber, acrylic fiber, polyester fiber such as polyethylene terephthalate fiber), pulp fibers, and the like. For example, 60% by mass or more of the nonwoven fabric is preferably composed of the fiber material. The ratio of the glass fiber to the fiber material constituting the nonwoven fabric is preferably 60% by mass or more. The nonwoven fabric may contain an inorganic powder (for example, silica powder, glass powder, diatomaceous earth) and the like.

The separator may be composed of only a nonwoven fabric. The separator may be, when required, a laminate of a nonwoven fabric and a microporous film, a laminate of a nonwoven fabric and a material the same as or different from the nonwoven fabric, or a product obtained by engaging recesses and projections to each other with a nonwoven fabric and a material the same as or different from the nonwoven fabric.

The microporous film is a porous sheet mainly composed of components other than fiber components. The microporous film is obtained by, for example, extrusion molding a composition containing, for example, a pore-forming additive (at least one of a polymer powder and oil) into a sheet shape and then removing the pore-forming additive to form pores. The microporous film preferably contains a material having acid resistance. In addition, those containing a polymer component as a main component are preferable. As the polymer component, a polyolefin (a polyethylene, a polypropylene, etc.) is preferable.

### (Electrolyte solution)

The electrolyte solution is an aqueous solution containing sulfuric acid. The electrolyte solution may be gelled as necessary and used for the lead-acid battery. The electrolyte solution may contain at least one selected from the group consisting of a cation (for example, a metal cation) and an anion (for example, an anion other than a sulfate anion (a phosphate ion, etc.)) as necessary. Examples of the metal cation include at least one selected from the group consisting of a sodium ion, a lithium ion, a magnesium ion, and an aluminum ion.

The specific gravity of the electrolyte solution in the lead-acid battery in the fully charged state at 20°C is, for example, 1.20 or more and may be 1.25 or more. The specific gravity of the electrolyte solution at 20°C is, for example, 1.35 or less and preferably 1.32 or less.

The specific gravity of the electrolyte solution in the lead-acid battery in the fully charged state at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming at least one of the positive electrode plate and the negative electrode plate as necessary after the step of housing the positive electrode plate, the negative electrode plate, and the electrolyte solution in the container. The positive electrode plate, the negative electrode plate, the electrolyte solution, and the separator are each prepared before being housed in the container.

The lead-acid battery may include at least one cell including the negative electrode plate. From the viewpoint of securing an excellent effect of suppressing accumulation of lead sulfate in the entire lead-acid battery, it is preferable that 50% or more (or 75% or more) of the cells constituting the lead-acid battery include the negative electrode plate, and it is more preferable that all of the cells include the negative electrode plate.

A valve regulated lead-acid battery and a power storage system including the valve regulated lead-acid battery according to one aspect of the present invention are described below.

(1) A valve regulated lead-acid battery comprising:
   a plurality of cells; and a plurality of cell chambers that respectively accommodate the plurality of cells, wherein
   each of the plurality of cells includes a positive electrode plate, a negative electrode plate, and an electrolyte solution,
   each of the plurality of cell chambers includes an exhaust valve independent from each other,
   the positive electrode plate includes a positive electrode material,
   the negative electrode plate includes a negative electrode material,
   the negative electrode material contains a carbonaceous material,
   a specific surface area : Sc of the carbonaceous material determined by a BET method satisfies Sc ≥ 500 m²/g, and
   a content: Cc of the carbonaceous material in the negative electrode material satisfies Cc ≥ 0.5% by mass.
(2) The valve regulated lead-acid battery according to (1), wherein the specific surface area Sc satisfies Sc ≤ 1000 m²/g.
(3) The valve regulated lead-acid battery according to (1) or (2), wherein the specific surface area Sc satisfies 650 m²/g ≥ Sc.
(4) The valve regulated lead-acid battery according to any one of (1) to (3), wherein the specific surface area Sc satisfies 750 m²/g ≥ Sc.
(5) The valve regulated lead-acid battery according to any one of (1) to (4), wherein the content Cc satisfies Cc ≤ 2.0% by mass.
(6) The valve regulated lead-acid battery according to any one of (1) to (5), wherein the content Cc satisfies 0.75% by mass ≤ Cc ≤ 1.75% by mass.
(7) A power storage system comprising:
   a valve regulated lead-acid battery;
   a vehicle that receives power supply from the valve regulated lead-acid battery; and a state-of-charge controller that controls an SOC of the valve regulated lead-acid battery, wherein
   the valve regulated lead-acid battery includes a plurality of cells and a plurality of cell chambers that respectively accommodate the plurality of cells,
   each of the plurality of cells includes a positive electrode plate,
   a negative electrode plate, and an electrolyte solution,
   each of the plurality of cell chambers includes an exhaust valve independent from each other,
   the negative electrode plate includes a negative electrode material containing a carbonaceous material,
   a specific surface area: Sc of the carbonaceous material determined by a BET method satisfies Sc ≥ 500 m²/g,
   a content: Cc of the carbonaceous material in the negative electrode material satisfies Cc ≥ 0.5% by mass, and
   the vehicle is subjected to idling stop control when the SOC of the valve regulated lead-acid battery is equal to or more than a threshold of 90% or more, and is not subjected to the idling stop control when the SOC of the valve regulated lead-acid battery is less than the threshold.
(8) The power storage system according to (7), wherein the specific surface area Sc satisfies Sc ≤ 1000 m²/g.
(9) The power storage system according to (7) or (8), wherein the specific surface area Sc satisfies 650 m²/g ≥ Sc.
(10) The power storage system according to any one of (7) to (9), wherein the specific surface area Sc satisfies 750 m²/g ≥ Sc.
(11) The power storage system according to any one of (7) to (10), wherein the content Cc satisfies Cc ≤ 2.0% by mass.
(12) The power storage system according to any one of (7) to (11), wherein the content Cc satisfies 0.75% by mass ≤ Cc ≤ 1.75% by mass.
(13) The power storage system according to (7) to (12), wherein the state-of-charge controller charges the valve regulated lead-acid battery at a constant voltage when the SOC of the valve regulated lead-acid battery is less than the threshold.
(14) The power storage system according to any one of (7) to (13), wherein charging at the constant voltage is performed at 2.30 V/cell or more and 2.45 V/cell or less.
(15) The power storage system according to (7) to (14), wherein the vehicle is a compact mobility.

### EXAMPLES

Hereinafter, the present invention will be specifically described based on examples and comparative examples, but the present invention is not limited to the following examples.

### <<Lead-acid battery A>>

A lead-acid battery is produced by the following procedure.

### (a) Preparation of negative electrode plate

A lead powder as a raw material, barium sulfate, a carbonaceous material, and an organic expander (sodium lignin sulfonate) are mixed with a suitable amount of a sulfuric acid aqueous solution to obtain a negative electrode paste. At this time, the carbonaceous material is mixed so that the content of the carbonaceous material determined by the procedure described above is 1.0% by mass. As the carbonaceous material, carbon black having a BET specific surface area Sc of 750 m²/g determined by the procedure described above is used. A mesh portion of the grid-shaped negative current collector is filled with the negative electrode paste, which is cured and dried to obtain a non-formed negative electrode plate.

### (b) Preparation of positive electrode plate

Lead powder as raw material is mixed with a sulfuric acid aqueous solution to obtain a positive electrode paste. A mesh portion of the grid-shaped positive current collector is filled with the positive electrode paste, which is cured and dried to obtain a non-formed positive electrode plate.

### (c) Assembly of lead-acid battery

Four non-formed negative electrode plates and three non-formed positive electrode plates are used, a separator is interposed between the negative electrode plates and the positive electrode plates, and the negative electrode plates and the positive electrode plates are alternately stacked to prepare an element. As the separator, a nonwoven fabric sheet of glass fiber is used.

The element is housed into a container made of polypropylene together with an electrolyte solution, and the container is sealed with a lid of each cell exhaust type to assemble a lead-acid battery. The assembled battery is subjected to formation to complete each cell exhaust lead-acid battery A (VRLA for compact mobility). The lead-acid battery A has a rated voltage of 12 V and a rated 10-hour rate capacity of 5 Ah. The specific gravity of the electrolyte solution after formation is 1.32.

### <<Lead-acid battery AR>>

Except that the carbonaceous material is mixed with the negative electrode paste so that the content of the carbonaceous material determined by the procedure described above is 0.3% by mass, similarly to the lead-acid battery A, the lead-acid battery is assembled and subjected to formation to complete each cell exhaust lead-acid battery A.

### <<Lead-acid battery B>>

Except that a collective exhaust lid is used, similarly to the lead-acid battery A, the lead-acid battery is assembled and subjected to formation to complete the collective exhaust lead-acid battery A.

### <<Lead-acid battery BR>>

Except that the carbonaceous material is mixed with the negative electrode paste so that the content of the carbonaceous material determined by the procedure described above is 0.3% by mass, similarly to the lead-acid battery B, a lead-acid battery is assembled and subjected to formation to complete the collective exhaust lead-acid battery A.

### [Evaluation of lead-acid battery]

The lead-acid battery after full charge is subjected to the following charge-discharge cycles of 5000 cycles at 25°C ± 2°C and 2500 cycles at 40°C ± 2°C. Thereafter, the following charge-discharge cycle is repeated at 10°C ± 2°C until the voltage at an end-of-discharge of the following IS discharge (3) reaches 6 V

When the voltage at the end-of-discharge did not reach 6 V at the 10,000-th cycle in total, 5,000 cycles were continuously repeated at 25°C ± 2°C, and 2,500 cycles were then repeated at 40°C ± 2°C, and then repeated at 10°C ± 2°C until the voltage at the end-of-discharge of the following IS discharge (3) reached a predetermined value.

### <Schedule of charge-discharge cycle>

(a) IS discharge (1): Discharge is performed for 20 seconds at a current value (A) which is twice the numerical value described as the rated 10-hour rate capacity (Ah).
(b) Discharge corresponding to the time of restart: Discharge is performed for 1 second at the current value (A) which is six times the numerical value described as the rated 10-hour rate capacity (Ah).
(c) Discharge corresponding to the time of motor acceleration: Discharge is performed for 0.5 seconds at the current value (A) which is fifteen times the numerical value described as the rated 10-hour rate capacity (Ah).
(d) Constant voltage charge (1): Charge is performed for 50 seconds at a constant voltage of 2.42 V ± 0.03 V/cell (about 14.52 V/6 cell) with the current value (A) of the numerical value described as the rated 10-hour rate capacity (Ah) as a maximum current.
(e) IS discharge (2): Discharge is performed for 20 seconds at the current value (A) which is twice the numerical value described as the rated 10-hour rate capacity (Ah).
(f) Discharge corresponding to the time of restart: discharge is performed for 1 second at the current value (A) which is six times the numerical value described as the rated 10-hour rate capacity (Ah).
(g) Discharge corresponding to the time of motor acceleration: Discharge is performed for 0.3 seconds at the current value (A) which is twenty times the numerical value described as the rated 10-hour rate capacity (Ah).
(h) IS discharge (3): Discharge is performed for 3 seconds at the current value (A) which is eight times the numerical value described as the rated 10-hour rate capacity (Ah).
(i) Constant voltage charge (2): Charge is performed for 100 seconds at a constant voltage of 2.42 V ± 0.03 V/cell (about 14.52 V/6 cell) with the current value (A) of the numerical value described as the rated 10-hour rate capacity (Ah) as a maximum current.

The results of the lead-acid batteries A, AR, B, and BR are shown in Table 1. The lead-acid battery A reached 6 V at the end-of-discharge of the IS discharge (3) at the 17,720-th cycle in total, and reached the end of life. An end-of-discharge voltage at 10,000 cycles was maintained at 8.6 V The other batteries reached 6 V at 10,000 cycles or less. For the battery in which the voltage at the end-of-discharge reached 6 V before reaching 10,000 cycles, the end-of-discharge voltage at 10,000 cycles could not be measured, and thus "-" was indicated in Table 1.

**[Table 1]**

| Battery | Number of cycles | Maintenance voltage (V) at 10,000 cycles |
|---|---|---|
| A | 17720 | 8.6 |
| A R | 10000 | - |
| B | 9170 | - |
| B R | 9120 | - |

Next, for the lead-acid batteries A and AR of each cell exhaust, the charge voltage in the constant voltage charge (1) and (2) in the above schedule was changed from 2.42 V ± 0.03 V/cell (about 14.52 V/6 cell) to 2.33 V ± 0.03 V/cell (about 13.98 V/6 cell), and the same change-discharge cycle was repeated. Table 2 shows the results.

**[Table 2]**

| Battery | Number of cycles |
|---|---|
| A | 8535 |
| A R | 8489 |

When comparing Tables 1 and 2, it can be understood that when constant voltage charge is performed at a voltage exceeding 14.0 V, the progress of stratification and sulfation of the lead-acid battery is further effectively suppressed.

### <<Lead-acid batteries C1 to C16>>

Except that the carbonaceous material having a specific surface area of the Sc value shown in Table 3 is mixed with the negative electrode paste so that the content of the carbonaceous material determined by the procedure described above is the Cc value shown in Table 3, similarly to the lead-acid battery A, the lead-acid battery is assembled and subjected to formation to complete each cell exhaust lead-acid batteries C1 to C16.

Next, evaluation is performed similarly as described above. Table 3 presents the results.

**[Table 3]**

| | Sc (m²/g) | Cc (mass%) | Number of cycles (times) | Maintenance voltage (V) |
|---|---|---|---|---|
| C1 | 750 | 0 | 7520 | 6.0 |
| C2 | 750 | 0.30 | 10000 | 6.0 |
| C3 | 750 | 0.5 | 17580 | 8.0 |
| C4 | 750 | 0.75 | 17650 | 8.6 |
| C5 | 750 | 1.0 | 17980 | 8.6 |
| C6 | 750 | 1.25 | 17700 | 8.6 |
| C7 | 750 | 1.5 | 17710 | 8.6 |
| C7 | 750 | 1.75 | 17690 | 8.6 |
| C9 | 200 | 1.0 | 9930 | - |
| C10 | 200 | 0.25 | 7510 | - |
| C11 | 200 | 0.5 | 9350 | - |
| C12 | 400 | 1.0 | 9800 | - |
| C13 | 500 | 1.0 | 17510 | 7.3 |
| C14 | 650 | 1.0 | 17720 | 8.6 |
| C15 | 950 | 1.0 | 17750 | 8.6 |
| C 16 | 1270 | 1.0 | 17730 | 7.6 |

As shown in Table 3, it can be understood that when the content Cc of the carbonaceous material in the negative electrode material is 0.5% by mass or more, a high maintenance voltage is obtained, and the progress of stratification and sulfation of the lead-acid battery is effectively suppressed. When the specific surface area Sc of the carbonaceous material is 500 m²/g or more (particularly 1000 m²/g or less), a high maintenance voltage can be obtained. It is found that when the content Cc of the carbonaceous material is less than 0.5% by mass, the progress of stratification and sulfation of the lead-acid battery cannot be suppressed even when the specific surface area Sc of the carbonaceous material is 500 m²/g or more.

While the present invention has been described with respect to presently preferred embodiments, such disclosure should not be construed in a limiting manner. Various modifications and modifications will undoubtedly become apparent to those skilled in the art to which the present invention belongs upon reading the above disclosure. Accordingly, the appended claims should be construed to encompass all variations and modifications without departing from the true spirit and scope of the present invention.

### INDUSTRIAL APPLICABILITY

The valve regulated lead-acid battery (VRLA) is suitable for compact mobility, IS vehicle applications, and the like. Note that these applications are merely illustrative and not limited to these applications.

### DESCRIPTION OF REFERENCE SIGNS

1A: each cell exhaust lead-acid battery
1B: collective exhaust lead-acid battery
2: negative electrode plate
3: positive electrode plate
4: separator
11: element
10: container
10R, 10r: cell chamber
12A: lid
13: exhaust valve
14r: collective exhaust chamber
20: power storage system
30: vehicle
40: state-of-charge controller
41: charge control unit
50: IS controller
60: engine

## Claims

1. A valve regulated lead-acid battery comprising:
a plurality of cells; and
a plurality of cell chambers that respectively accommodate the plurality of cells,
wherein
each of the plurality of cells includes a positive electrode plate, a negative electrode plate, and an electrolyte solution,
each of the plurality of cell chambers includes an exhaust valve independent from each other,
the positive electrode plate includes a positive electrode material,
the negative electrode plate includes a negative electrode material,
the negative electrode material contains a carbonaceous material,
a specific surface area: Sc of the carbonaceous material determined by a BET method satisfies Sc ≥ 500 m²/g, and
a content: Cc of the carbonaceous material in the negative electrode material satisfies Cc ≥ 0.5% by mass.

2. The valve regulated lead-acid battery according to claim 1,
wherein the specific surface area Sc satisfies Sc ≤ 1000 m²/g.

3. The valve regulated lead-acid battery according to claim 1 or 2,
wherein the specific surface area Sc satisfies Sc ≥ 650 m²/g.

4. The valve regulated lead-acid battery according to any one of claims 1 to 3, wherein the specific surface area Sc satisfies Sc ≥ 750 m²/g.

5. The valve regulated lead-acid battery according to any one of claims 1 to 4, wherein the content Cc satisfies Cc ≤ 2.0% by mass.

6. The valve regulated lead-acid battery according to any one of claims 1 to 5, wherein the content Cc satisfies 0.75% by mass ≤ Cc ≤ 1.75% by mass.

7. A power storage system comprising:
a valve regulated lead-acid battery;
a vehicle that receives power supply from the valve regulated lead-acid battery; and
a state-of-charge controller that controls a state of charge: SOC of the valve regulated lead-acid battery,
wherein
the valve regulated lead-acid battery includes a plurality of cells and a plurality of cell chambers that respectively accommodate the plurality of cells,
each of the plurality of cells includes a positive electrode plate, a negative electrode plate, and an electrolyte solution,
each of the plurality of cell chambers includes an exhaust valve independent from each other,
the negative electrode plate includes a negative electrode material containing a carbonaceous material,
a specific surface area: Sc of the carbonaceous material determined by a BET method satisfies Sc ≥ 500 m²/g,
a content: Cc of the carbonaceous material in the negative electrode material satisfies Cc ≥ 0.5% by mass, and
the vehicle is subjected to idling stop control when the SOC of the valve regulated lead-acid battery is equal to or more than a threshold of 90% or more, and is not subjected to the idling stop control when the SOC of the valve regulated lead-acid battery is less than the threshold.

8. The power storage system according to claim 7, wherein the specific surface area Sc satisfies Sc ≤ 1000 m²/g.

9. The power storage system according to claim 7 or 8, wherein the specific surface area Sc satisfies Sc ≥ 650 m²/g.

10. The power storage system according to any one of claims 7 to 9, wherein the specific surface area Sc satisfies Sc ≥ 750 m²/g.

11. The power storage system according to any one of claims 7 to 10, wherein the content Cc satisfies Cc ≤ 2.0% by mass.

12. The power storage system according to any one of claims 7 to 11, wherein the content Cc satisfies 0.75% by mass ≤ Cc ≤ 1.75% by mass.

13. The power storage system according to any one of claims 7 to 12, wherein the state-of-charge controller charges the valve regulated lead-acid battery at a constant voltage when the SOC of the valve regulated lead-acid battery is less than the threshold.

14. The power storage system according to any one of claims 7 to 13, wherein charging at the constant voltage is performed at 2.30 V/cell or more and 2.45 V/cell or less.

15. The power storage system according to any one of claims 7 to 14, wherein the vehicle is a compact mobility.
